# EUROPEAN PATENT SPECIFICATION

(11) **EP 1 741 887 B1**
(45) Date of publication and mention of the grant of the patent: **09.11.2011**
(21) Application number: 05734365.9
(22) Date of filing: 14.04.2005
(51) Int. Cl.: F01N 3/08

(54) **LIQUID FEED DEVICE FOR EXHAUST GAS AFTERTREATMENT DEVICE**
FLÜSSIGKEITSZUFUHRVORRICHTUNG FÜR ABGASNACHBEHANDLUNGSVORRICHTUNG
DISPOSITIF D'INJECTION DE LIQUIDE POUR DISPOSITIF DE POST-TRAITEMENT DE GAZ D'ÉCHAPPEMENT

(30) Priority: 30.04.2004 JP 2004135450
(43) Date of publication of application: 10.01.2007
(73) Proprietor: Bosch Corporation, Tokyo 150-8360 (JP)
(72) Inventor: Kaneko, Junichi, Bosch Automotive Systems Corp., Higashimatsuyama-shi, Saitama 355-8603 (JP)
(74) Representative: Schwabe, Hans-Georg
(86) International application number: PCT/JP2005/007567
(87) International publication number: WO 2005/106220

(56) References cited:
- JP-A- 2002 155 732
- JP-A- 2002 242 664
- JP-A- 2002 513 109
- JP-A- 2002 527 660
- US-A- 5 884 475

## Description

### Technical Field

The present invention relates to a liquid supply device for an exhaust gas post-treatment device.

### Background Art

To purify exhaust gas of a diesel engine, an exhaust gas post-treatment system which sprays an urea water solution into an exhaust gas through a nozzle and purifies the exhaust gas by using a catalytic conversion action is known (JP-3022601). This technique is basically based on a selective catalytic reduction process, and the urea water solution is used in place of ammonia as a reducing agent for catalytic conversion of nitrogen oxide.

Although this type of liquid used for the exhaust gas treatment is stored in a tank or the like, since an outside air temperature in a cold district reaches a freezing point or below, there exists a fear that the liquid in the inside of the tank is frozen so that it is impossible to supply the liquid. For this end, the constitution which can prevent the liquid in the inside of the storing tank from being frozen by providing a heating device to the storing tank or the like has been adopted.

This type of a liquid supply device is configured such that the liquid in the inside of the storing tank is fed to a pump module through a liquid supply pipe, the liquid is pressurized in the pump module, and is sprayed into an exhaust pipe. Since a temperature of the liquid supply pipe also becomes the outside air temperature outside a vehicle, there exists a fear that the liquid is also frozen in the inside of the liquid supply pipe. However, since the liquid supply pipe is mounted on a vehicle in an assembly line of a vehicle body in conformity with a type of the vehicle based on the different specification, a thermal sensor is not mounted on the pipe. Accordingly, conventionally, a heating control of the liquid supply pipe is performed using information from a temperature sensor for detecting the temperature of the liquid in the inside of the storage tank thus performing a heat insulation control to prevent the liquid from being frozen in the inside of the pipe.

However, heat capacity of the liquid supply pipe is small compared with heat capacity of the storage tank and hence, the liquid is liable to be easily frozen in the inside of the pipe whereby the conventional constitution cannot guarantee a thawing state of the liquid in the inside of the liquid supply pipe. Accordingly, there has been adopted the constitution which operates a pressurizing pump when a temperature of the liquid in the inside of the storage tank becomes a predetermined value or more, determines that thawing is completed when the elevation of pressure is confirmed on an output side of the pressurizing pump and, thereafter, enters a heat insulation mode.

With respect to the operation of a heater for heating the liquid supply pipe after the completion of thawing is performed, an operation to set the heater in an OFF mode when the temperature in the inside of the storage tank exceeds a threshold value and an operation to set the heater in a heat insulation mode when the temperature in the inside of the storage tank becomes lower than the threshold value are repeated. The heater is driven with a pulse current in the respective modes and a method for calculating a drive duty ratio has the following two options and these modes can be selected by data setting.
1. The drive duty ratio is obtained based on a value of an ambient temperature.
2. The drive duty ratio is obtained based on the temperature of the liquid in the storage tank and temperature of the liquid in the pressuring pump.

However, these conventional options have the following drawbacks respectively.

First of all, in obtaining the drive duty ratio based on the value of the ambient temperature, even when the temperature of the liquid inside the liquid supply pipe is elevated due to the circulation of the liquid in the inside of the heated storage tank, the drive duty ratio is fixed and hence, there exists a fear of overheating. Secondly, in obtaining the drive duty ratio based on the temperature of the liquid in the storage tank and temperature of the liquid in the pressuring pump, when there is no circulation of the liquid in the inside of the liquid supply pipe, since the pipe has the small heat capacity compared to the storage tank, the lowering of the temperature of the liquid supply pipe is accelerated. Accordingly, the liquid in the inside of the liquid supply pipe is cooled by the ambient temperature and the temperature is lowered than the calculated temperature. In spited of such a circumstance, there exists a fear that the heater is operated with the low duty ratio leading to the insufficient heating.

US- 5,884,475 A describes a method and device for introducing liquid into an exhaust-gas purification system. Nitrogen oxides emitted by an internal-combustion engine operated with excess air are normally converted by the method of selective catalytic reduction by bringing the nitrogen oxides, together with ammonia, into contact with a selective catalyst. Due to the dangers associated with the use of ammonia, in a motor vehicle ammonia should only be carried in the form of a substance which liberates ammonia, generally an aqueous urea solution. The method and a device for introducing liquid into an exhaust-gas purification system avoids frost damage to sections of the system during shutdown times and permits operation of the system at temperatures below the freezing point of the reducing agent solution being used. The method and device include a (thermally insulated) reservoir for the reducing agent liquid and a liquid supply line which is connected thereto and terminates in an outlet opening for the liquid. The reservoir and the liquid supply line can be heated. Furthermore, a heater is provided for liquefying a starting volume which is small as compared with the volume of the reservoir. The liquid supply line may also have a back-flush valve to which a gas that is under pressure can be applied. The supply line can consequently be blown free.

### SUMMARY OF THE INVENTION

It is an object of the present invention to provide a liquid supply device for an exhaust gas post-treatment device which can overcome the above-mentioned drawbacks.

The aforementioned object is solved by the subject-matter of the independent claim. The dependent claims are directed to advantageous embodiments.

### ADVANTAGES OF THE INVENTION

Advantageously, it is provided a liquid supply device for an exhaust gas post-treatment device which supplies liquid stored in the inside of a tank to an exhaust gas purifying device through a pipe, and thermally maintains the liquid using a thermally-maintaining device after thawing the liquid in the inside of the tank, wherein the thermally-maintaining device includes a tank temperature sensor which detects a temperature in the inside of the tank, an ambient temperature sensor which detects an ambient temperature, a heater which heats the pipe, a selecting part which selects either one of an output of the ambient temperature sensor and an output of the tank temperature sensor based on a flow state of the liquid in the inside of the pipe and a driving part which supplies a current for thermal-maintenance necessary for thermal-maintenance to the heater in response to the output from the selecting part.

Advantageously, after thawing the liquid in the inside of the tank, a current which flows in the heater is controlled based on the output of the desired sensor out of the tank temperature sensor and the ambient temperature sensor, and whether the liquid flows in the inside of the pipe and hence, the thermal-maintenance of the pipe can be appropriately performed.

### Brief Description of the Drawings

Fig. 1 is a constitutional view showing one example of a liquid supply device for an exhaust gas post-treatment device according to the present invention.
Fig. 2 is a detailed constitutional view of a thermal-maintaining device shown in Fig. 1.

### Best Mode for Carrying Out the Invention

To explain the present invention in more detail, the present invention is explained in conjunction with attached drawings.

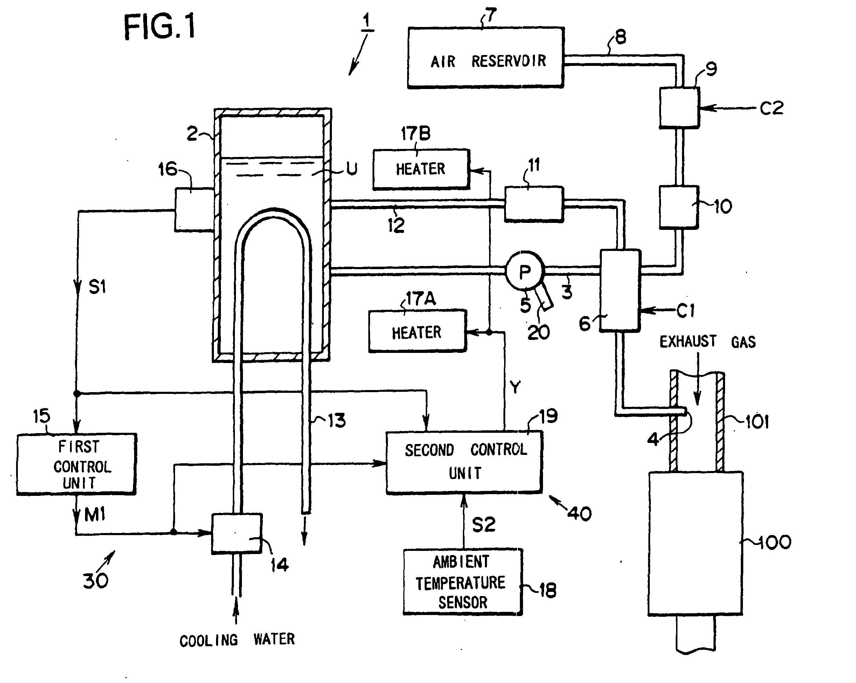

Fig. 1 is a constitutional view showing one example of a liquid supply device for an exhaust gas post-treatment device according to the present invention. A liquid supply device 1 is a device for supplying urea water solution in the exhaust gas post-treatment, and includes a tank 2 for storing the urea water solution U and a pipe 3 for introducing the urea water solution U in the tank 2 into an exhaust gas post-treatment device 100. In this embodiment, the exhaust gas post-treatment device 100 is mounted on an exhaust pipe 101, and the urea water solution U is injected into and is supplied to the inside of the exhaust pipe 101 through an injection nozzle 4 which is mounted on a distal end portion of the pipe 3 at an upstream side of the exhaust gas post-treatment device 100.

On a middle portion of the pipe 3, a pump 5 for pressurizing the urea water solution U and a dosing valve 6 are mounted. The dosing valve 6 is connected to an air reservoir 7 by way of a pipe 8, and by performing an open/close control of a shut-off valve 9 which is mounted on the pipe 8, the supply of compressed air to the dosing valve 6 can be controlled. Numeral 10 indicates a relief valve. Further, between the tank 2 and the dosing valve 6, a return pipe 12 having a relief valve 11 is provided. An extra amount of the urea water solution U which is fed to the dosing valve 6 by way of the pipe 3 is returned to the tank 2 by way of the relief valve 11. Here, a pressure sensor 20 for measuring pressure is mounted on the pipe in the vicinity of the pump 5 and is used to confirm the injection pressure or the like. Further, the dosing valve 6 and the shut-off valve 9 are configured to perform predetermined operations in response to control signals C1, C2 from respective control units not shown in drawings.

To thaw the urea water solution U in the tank 2 when the urea water solution U is frozen and, at the same time, to thermally maintain the tank 2 for preventing the urea water solution U from being frozen, a thawing and thermal-maintaining device 30 is provided. The thawing and thermal-maintaining device 30 includes a cooling water pipe 13 for circulating cooling water for an engine not shown in drawings in the inside of the tank 2, a shut-off valve 14 which is mounted on the cooling water pipe 13, and a first control unit 15 for performing an ON-OFF control of the shut-off valve 14 to control the circulation of the cooling water in the inside of the cooling water pipe 13. To the first control unit 15, a tank temperature signal S1 is inputted from a tank temperature sensor 16 for detecting a temperature of the urea water solution U in the inside of the tank 2.

The first control unit 15 determines whether the urea water solution U in the inside of the tank 2 is frozen or not in response to the tank temperature signal S1, and a thawing and thermal-maintaining control signal M1 which is outputted for thawing and thermal-maintaining from the first control unit 15 in accordance with a result of the determination is inputted into the shut-off valve 14. Accordingly, the ON-OFF control of the shut-off valve 14 is performed in response to the thawing and thermal-maintaining control signal M1 and hence, the supply of the cooling water to the cooling water pipe 13 is adjusted thus performing the thawing and thermal-maintenance of the urea water solution U in the inside of the tank 2.

The liquid supply device 1 further includes a thermal-maintaining device 40 which performs a thermal-maintaining operation for preventing the urea water solution U in the inside of the pipe 3 from being frozen again after the urea water solution U in the inside of the tank 2 thaws and flows in the inside of the pipe 3.

The thermal-maintaining device 40 includes a heater 17A for heating the pipe 3 and a heater 17B for heating a return pipe 12. Here, the heaters 17A, 17B are constituted as electric heaters. The thermal-maintaining device 40 includes a second control unit 19 to which the tank temperature signal S1 from the tank temperature sensor 16, an ambient temperature signal S2 which is outputted from an ambient temperature sensor 18 for detecting the ambient temperature of the liquid supply device 1 and indicates an ambient temperature and a thawing and thermal-maintaining control signal M1 are inputted. A drive current Y necessary for performing desired heating is supplied from the second control unit 19 to the heaters 17A, 17B.

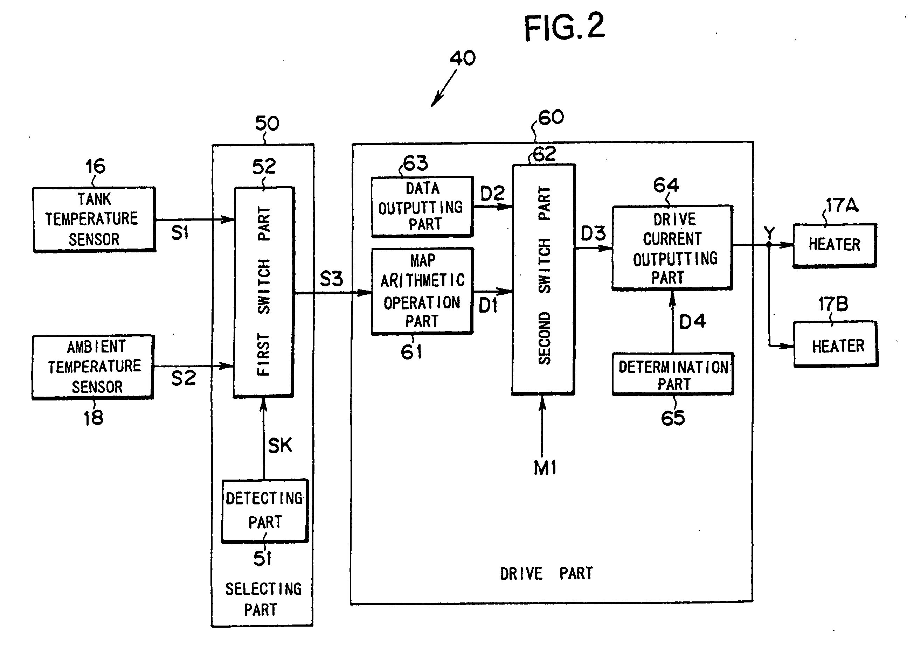

Fig. 2 is a detailed constitutional view of the thermal-maintaining device 40. The thermal-maintaining device 40 includes a selecting part 50 to which the tank temperature signal S1 and the ambient temperature signal S2 are inputted and which selects and output either one of the above-mentioned signals in response to a target-injection-quantity signal for controlling a quantity of the urea water solution U in the inside of the pipe 3, and a drive part 60 which supplies the drive current Y necessary for thermally maintaining the pipe 3 to the heaters 17A, 17B in response to an output signal S3 from the selecting part 50. The drive current Y adopts a pulse current mode in which a duty ratio of the current is determined in a manner described later. Here, the second control unit 19 shown in Fig. 1 is constituted of the selecting part 50 and the drive part 60.

The selecting part 50 includes a detecting part 51 for detecting whether the urea water solution U flows in the inside of the pipe 3 or not in response to the target-injection-quantity signal and a lapsed time, and a first switch part 52 for selecting either one of the tank temperature signal S1 or the ambient temperature signal S2 in response to a detection output signal SK from the detecting part 51 and outputs the selected signal as the output signal S3. The detecting part 51 is provided for detecting a flow state of the urea water solution U in the inside of the pipe 3. In the detecting part 51, when a detection result that the urea water solution U does not flow in the inside of the pipe 3 is obtained, the ambient temperature signal S2 is selected. In the detecting part 51, when a detection result that the urea water solution U flows in the inside of the pipe 3 is obtained, the tank temperature signal S1 is selected.

The drive part 60 includes a map arithmetic operation part 61 which responds to the output signal S3 and performs a map arithmetic operation of a duty ratio of the drive current Y in accordance with a temperature indicated by the output signal S3. The duty ratio data D1 indicative of the arithmetic operation result is outputted from the map arithmetic operation part 61, and the duty ratio data D1 is inputted to a second switch part 62. Numeral 63 indicates a data outputting part which outputs a fixed data D2 indicative of a duty ratio 1, and the fixed data D2 is also inputted to the second switch part 62.

The thawing and thermal-maintaining control signal M1 is inputted to the second switch part 62 from the first control unit 15 as a switching control signal. When the thawing and thermal-maintaining control signal M1 is inputted, that is, when the first control unit 15 performs a control for turning on the shut-off valve 14 so as to perform thawing, the fixed data D2 is selected by the second switch part 62, while in cases other than the above-mentioned case, the duty ratio data D1 is selected.

Either data selected in the above-mentioned manner is supplied to a drive current output part 64 from the second switch part 62 as output data D3. Numeral 65 indicates a determination part which determines whether the thawing or the thermal-maintaining of the urea water solution U in the inside of the pipe 3 and the return pipe 12 using the heaters 17A, 17B is necessary or not. The determination part 65 determines whether either one of the tank temperature signal S1 or the ambient temperature signal S2 indicates a urea-water freezing temperature or below or not. The determination data D4 indicative of the determination result of the determination part 65 is transmitted to the drive current output part 64. The drive current output part 64 is configured to output the drive current Y of the duty ratio which conforms to the output data D3 only when the determination part 65 determines that it is necessary to thaw or thermally maintain the urea water solution U in the inside of the pipe 3 and the return pipe 12.

Since the thermal-maintaining device 40 has the above-mentioned constitution, when the second switch part 62 selects the fixed data D2 in response to the thawing-and-thermal-maintaining control signal M1, the drive current Y of the duty ratio 1 is outputted from the drive current output part 64, and the pipe 3 and the return pipe 12 are heated by the heaters 17A, 17B for thawing the urea water solution U in the pipe 3 and the return pipe 12. Here, a thawing state can be detected by whether a pressure change of the urea water solution is observed by the pressure sensor 20 or not when the pump 5 is operated and, at the same time, the relief valve 11 for the extra amount of the urea water solution U is operated.

In this manner, when the thawing of the urea water solution U in the inside of the tank 2 using the thawing and heat insulating device 30 and the thawing of the urea water solution U in the inside of the pipe 3 and the return pipe 12 are finished, the second switch part 62 selects the duty-ratio data D1. Further, only when the determination part 65 determines that the thawing or the thermal-maintaining for the pipe 3 is necessary, the drive current Y of the duty ratio which conforms to the duty-ratio data D1 is supplied to the heaters 17A, 17B as a current for thermal-maintaining.

Since the first switch part 52 selects the tank temperature signal S1 when the urea water solution U flows in the inside of the pipe 3, the drive current Y of the duty ratio which conforms to the temperature of the urea water solution U in the inside of the tank 2 is outputted after the thawing operation. Accordingly, when the urea water solution U flows in the inside of the pipe 3 after thawing, the temperature of the urea water solution U in the inside of the tank 2 and the temperature of the urea water solution U in the inside of the pipe 3 become substantially equal and hence, the extremely appropriate thermal-maintaining operation is guaranteed.

After thawing, when an exhaust gas becomes a low-NOX state in an idling or a low load operation and the injection of the urea water solution is stopped, and time elapses, although the urea water solution U in the inside of the tank 2 is not frozen, the urea water solution U in the inside of the low-heat-capacity pipe 3 is frozen. In such a case, the detecting part 51 promptly detects that the flow of the urea water solution U in the inside of the pipe 3 is stopped in response to the target-injection-quantity signal, and hence, the first switch part 52 is changed over to transmit the ambient temperature signal S2 to the drive part 60 as the output signal S3. Further, the drive current Y of the duty ratio which conforms to the detected ambient temperatures is given to the heaters 17A, 17B which conform to the ambient temperature signal S2.

The map data characteristics are set such that the value of the duty-ratio data D1 outputted from the map arithmetic operation part 61 becomes larger corresponding to the lowering of the inputted temperature. Since the ambient temperature is lower than the temperature in the inside of the tank 2 in general, when the flow of the urea water solution U in the inside of the pipe 3 is stopped, the drive current Y of the larger duty-ratio is supplied to the heaters 17A, 17B whereby the heating of the pipe 3 and the return pipe 12 is accelerated. In this manner, the thermal-maintaining of the pipe 3 and the return pipe 12 can be performed appropriately depending on the situation, and the overheating and the refreezing of the pipe 3 and the return pipe 12 can be effectively prevented. In this manner, during a period in which the liquid supply device 1 is operated, the injection failure of the urea water solution can be effectively prevented thus enabling the excellent thermal-maintaining operation.

Here, in Fig. 2, either one of the duty-ratio data D1 or the fixed data D2 is selected in response to the thawing and thermal-maintaining control signal M1. However, even when the thawing operation of the pipe 3 is performed by another device, it may be possible to directly supply the duty-ratio data D1 to the drive current output part 64.

### Industrial Applicability

According to the present invention, it is possible to smoothly supply the liquid for an exhaust gas post-treatment device and hence, the present invention is useful for improving a liquid supply device for an exhaust gas post-treatment device.

## Claims

1. A liquid supply device (1) for an exhaust gas post-treatment device (100) which supplies liquid (U) stored in the inside of a tank (2) to an exhaust gas purifying device through a pipe (3), and the pipe (3) being thermally maintained using a second thawing and thermal-maintaining device (40) after thawing the liquid (U) in the inside of the tank (2) by a first thawing and thermal-maintaining device (30), wherein the second thawing and thermal-maintaining device (40) includes:
a tank temperature sensor (16) configured to detect a temperature in the inside of the tank (2);
an ambient temperature sensor (18) configured to detect an ambient temperature;
a heater (17A) configured to heat the pipe (3);
a selecting part (50) configured to select either one of an output (S2) of the ambient temperature sensor (18) and an output (S1) of the tank temperature sensor (16) based on a flow state of the liquid (U) in the inside of the pipe (3); and
a driving part (60) configured to supply a current (Y) for thermal-maintenance necessary for thermal-maintenance in response to the output (S3) from the selecting part (50), the driving part (60) including a map arithmetic operation part (61) configured to respond to the output signal (S3) of the selecting part (50) and to perform a map arithmetic operation of a duty ratio of the drive current (Y) in accordance with a temperature indicated by the output signal (S3) of the selecting part (50).

2. The liquid supply device (1) according to claim 1, wherein the selecting part (50) includes a detecting part (51) configured to detect a flow state of liquid in the inside of the pipe (3), and a switching part (52) configured to select either one of the output (S2) of the ambient temperature sensor (18) and the output (S1) of the tank temperature sensor (16) in response to the detecting part(51).

3. The liquid supply device (1) according to claim 1 or 2, wherein the selecting part (50) selectively outputs the output (S2) of the ambient temperature sensor (18) when it is determined that the liquid (U) is frozen in the inside of the pipe (3) based on the flow state of the liquid (U) in the inside of the pipe (3), and selectively outputs the output (S1) of the tank temperature sensor (16) when it is determined that the liquid (U) flows in the inside of the pipe (3).

4. The liquid supply device (1) according to claim 1 or 2, wherein the driving part (60) outputs a pulse current (Y) of a duty ratio which is controlled in response to the output (S3) from the selecting part (50).

5. The liquid supply device (1) according to claim 4, wherein the driving part (60) sets the duty ratio of the pulse current (Y) to a predetermined fixed value when thawing the liquid (U) in the inside of the tank (2).

6. The liquid supply device (1) according to claim 4, wherein the driving part (60) further includes a determining part (65) configured to determine whether the liquid (U) in the inside of the pipe (3) is required to be thawed or thermally maintained or not, and to output the pulse current (Y) only when it is determined that the liquid (U) in the inside of the pipe (3) is required to be thawed or thermally maintained.

7. The liquid supply device (1) according to claim 5, wherein the driving part (60) further includes a determining part (65) configured to determine whether the liquid (U) in the inside of the pipe (3) is required to be thawed or thermally maintained or not, and to output the pulse current (Y) only when determined that the liquid (U) in the inside of the pipe (3) is required to be thawed or thermally maintained.

8. The liquid supply device (1) according to claim 6 or 7, wherein the determining part (65) responds to the tank temperature sensor (16) or the ambient temperature sensor (18) and performs the determination based on whether either one of a tank temperature and an ambient temperature becomes a urea-water freezing temperature or below.

## Patentansprüche

1. Flüssigkeitszufiihrvorrichtung (1) für eine Abgasnachbehandlungsvorrichtung (100), welche Flüssigkeit (U), die im Inneren eines Tanks bzw. Behälters (2) gespeichert ist, einer Abgasaufbereitungsvorrichtung über bzw. durch eine Röhre (3) zuführt, und wobei die Röhre (3) thermisch aufrechterhalten bzw. beibehalten wird, und zwar unter Verwendung einer zweiten Auftau- und Wärme erhaltenden bzw. Wärme aufrechterhaltenden Vorrichtung (40) nachdem die Flüssigkeit (U) im Inneren des Tanks bzw. Behälters (2) durch eine erste Auftau- und Wärme erhaltende bzw. Wärme aufrechterhaltende Vorrichtung (30) aufgetaut wurde, wobei die zweite Auftau- und Wärme erhaltende bzw. Wärme aufrechterhaltende Vorrichtung (40) einschließt:
einen Tanktemperatursensor bzw. Behältertemperatursensor (16), der konfiguriert ist, um eine Temperatur im Inneren des Tanks bzw. Behälters (2) zu detektieren;
einen Umgebungstemperatursensor (18), der konfiguriert ist, um eine Umgebungstemperatur zu detektieren;
einen Heizer (17A), der konfiguriert ist, um die Röhre (3) zu heizen bzw. zu erwärmen;
ein Auswahlteil (50), das konfiguriert ist, um eines von einem Ausgang (S2) des Umgebungstemperatursensors (18) und einem Ausgang (S 1) des Tanktemperatursensors bzw. Behältertemperatursensors (16) basierend auf einem Fließzustand bzw. Flusszustand der Flüssigkeit (U) im Inneren der Röhre (3) zu wählen bzw. auszuwählen; und
ein Treibteil (60), das konfiguriert ist, um einen Strom (Y) zum Wärme erhalten bzw. Wärme aufrechterhalten zuzuführen, der notwendig ist, um Wärme zu erhalten bzw. aufrecht zu erhalten, und zwar in Antwort auf den Ausgang (S3) von dem Auswahlteil (50), wobei das Treibteil (60) ein abbildungsaritmetisches Operationsteil (61) einschließt, das konfiguriert ist, um auf das Ausgangssignal (S3) des Auswahlteils (50) zu reagieren bzw. zu antworten, und, um eine abbildungsaritmetische Operation eines Betriebsverhältnisses bzw. Arbeitsverhältnisses des Treibstroms (Y) in Übereinstimmung mit einer Temperatur, die durch das Ausgangssignal (S3) des Auswahlteils (50) angedeutet ist, durchzuführen.

2. Flüssigkeitszuführvorrichtung (1) nach Anspruch 1, wobei das Auswahlteil (50) ein Detektierteil (51), das konfiguriert ist, um einen Fließzustand bzw. Flusszustand der Flüssigkeit im Inneren der Röhre (3) zu detektieren, und ein Schaltteil einschließt, das konfiguriert ist, um eins von dem Ausgang (S2) des Umgebungstemperatursensors (18) und dem Ausgang (S1) des Tanktemperatursensors bzw. Behältertemperatursensors (16) in Antwort auf das Detektierteil (51) zu wählen bzw. auszuwählen.

3. Flüssigkeitszuführvorrichtung (1) nach Anspruch 1 oder 2, wobei das Auswahlteil (50) selektiv den Ausgang (S2) des Umgebungstemperatursensors (18) ausgibt, wenn es bestimmt ist, dass die Flüssigkeit (U) im Inneren der Röhre (3) gefroren ist, und zwar basierend auf dem Fließzustand bzw. Flusszustand der Flüssigkeit (U) im Inneren der Röhre (3) und selektiv den Ausgang (S1) des Tanktemperatursensors bzw. Behältertemperatursensors (16) ausgibt, wenn es bestimmt ist, dass die Flüssigkeit (U) im Inneren der Röhre (3) fließt.

4. Flüssigkeitszuführvorrichtung (1) nach Anspruch 1 oder 2, wobei das Treibteil (60) einen Pulsstrom (Y) von einem Betriebsverhältnis bzw. Arbeitsverhältnis ausgibt, welcher in Antwort auf den Ausgang (S3) von dem Auswahlteil (50) gesteuert ist.

5. Flüssigkeitszuführvorrichtung (1) nach Anspruch 4, wobei das Treibteil (60) das Betriebsverhältnis bzw. Arbeitsverhältnis des Pulsstroms (Y) auf einen vorbestimmten fixierten bzw. festen Wert einstellt, wenn die Flüssigkeit (U) im Inneren des Tanks (2) auftaut.

6. Flüssigkeitszuführvorrichtung (1) nach Anspruch 4, wobei der Treibteil (60) weiter ein Bestimmungsteil (65) einschließt, dass konfiguriert ist, um zu bestimmen, ob es notwendig ist, die Flüssigkeit (U) im Inneren der Röhre (3) aufzutauen oder thermisch zu erhalten bzw. aufrecht zu erhalten oder nicht, und, um den Pulsstrom (Y) nur auszugeben, wenn bestimmt ist, dass es notwendig ist, die Flüssigkeit (U) im Inneren der Röhre (3) aufzutauen oder thermisch zu erhalten bzw. beizubehalten.

7. Flüssigkeitszuführvorrichtung (1) nach Anspruch 5, wobei der Treibteil (60) weiter ein Bestimmungsteil (65) einschließt, dass konfiguriert ist, um zu bestimmen, ob es notwendig ist, die Flüssigkeit (U) im Inneren der Röhre (3) aufzutauen oder thermisch zu erhalten bzw. aufrecht zu erhalten oder nicht, und, um den Pulsstrom (Y) nur auszugeben, wenn bestimmt ist, dass es notwendig ist, die Flüssigkeit (U) im Inneren der Röhre (3) aufzutauen oder thermisch zu erhalten bzw. beizubehalten.

8. Flüssigkeitszuführvorrichtung (1) nach Anspruch 6 oder 7, wobei der Bestimmungsteil (65) auf den Tanktemperatursensor bzw. Behältertemperatursensor (16) oder den Umgebungstemperatursensor (18) reagiert bzw. antwortet und die Bestimmung basierend darauf durchgeführt wird, ob eins von einer Tanktemperatur und einer Umgebungstemperatur eine Urea-Wassergefriertemperatur oder niedriger ist.

## Revendications

1. Dispositif d'admission de liquide (1) pour un dispositif de post-traitement de gaz d'échappement (100), qui délivre un liquide (U) stocké à l'intérieur d'un réservoir (2) à un dispositif de purification de gaz d'échappement par l'intermédiaire d'un tuyau (3), le tuyau étant maintenu thermiquement à l'aide d'un deuxième dispositif de maintien thermique et de décongélation (40) après la décongélation du liquide (U) à l'intérieur du réservoir (2) par un premier dispositif de maintien thermique et de décongélation (30), le deuxième dispositif de maintien thermique et de décongélation (40) comprenant :
un capteur de température de réservoir (16) configuré de façon à détecter une température à l'intérieur du réservoir (2) ;
un capteur de température ambiante (18) configuré de façon à détecter une température ambiante ;
un élément chauffant (17A) configuré de façon à chauffer le tuyau (3) ;
une partie de sélection (50) configurée de façon à sélectionner l'une d'une sortie (S2) du capteur de température ambiante (18) et d'une sortie (S1) du capteur de température de réservoir (16) en fonction d'un état d'écoulement du liquide (U) à l'intérieur du tuyau (3) ; et
une partie d'actionnement (60) configurée de façon à délivrer un courant (Y) pour le maintien thermique, nécessaire pour le maintien thermique, en réponse à la sortie (S3) de la partie de sélection (50), la partie d'actionnement (60) comprenant une partie d'opération arithmétique de carte (61) configurée de façon à répondre au signal de sortie (S3) de la partie de sélection (50) et
à effectuer une opération arithmétique de carte d'un rapport cyclique du courant d'actionnement (Y) en fonction d'une température indiquée par le signal de sortie (S3) de la partie de sélection (50).

2. Dispositif d'admission de liquide (1) selon la revendication 1, dans lequel la partie de sélection (50) comprend une partie de détection (51) configurée de façon à détecter un état d'écoulement de liquide à l'intérieur du tuyau (3), et une partie de commutation (52) configurée de façon à sélectionner l'une ou l'autre de la sortie (S2) du capteur de température ambiante (18) et de la sortie (S1) du capteur de température de réservoir (16) en réponse à la partie de détection (51).

3. Dispositif d'admission de liquide (1) selon la revendication 1 ou 2, dans lequel la partie de sélection (50) délivre en sortie de façon sélective la sortie (S2) du capteur de température ambiante (18) lorsqu'il est déterminé que le liquide (U) est gelé à l'intérieur du tuyau (3) en fonction de l'état d'écoulement du liquide (U) à l'intérieur du tuyau (3), et délivre en sortie de façon sélective la sortie (S1) du capteur de température de réservoir (16) lorsqu'il est déterminé que le liquide (U) s'écoule à l'intérieur du tuyau (3).

4. Dispositif d'admission de liquide (1) selon la revendication 1 ou 2, dans lequel la partie d'actionnement (60) délivre en sortie un courant pulsé (Y) ayant un rapport cyclique qui est commandé en réponse à la sortie (S3) de la partie de sélection (50).

5. Dispositif d'admission de liquide (1) selon la revendication 4, dans lequel la partie d'actionnement (60) établit le rapport cyclique du courant pulsé (Y) à une valeur fixe prédéterminée lors de la décongélation du liquide (U) à l'intérieur du réservoir (2).

6. Dispositif d'admission de liquide (1) selon la revendication 4, dans lequel la partie d'actionnement (60) comprend de plus une partie de détermination (65) configurée de façon à déterminer si le liquide (U) à l'intérieur du tuyau (3) doit ou non être dégelé ou thermiquement maintenu, et à délivrer en sortie le courant pulsé (Y) uniquement lorsqu'il est déterminé que le liquide (U) à l'intérieur du tuyau (3) doit être dégelé ou thermiquement maintenu.

7. Dispositif d'admission de liquide (1) selon la revendication 5, dans lequel la partie d'actionnement (60) comprend de plus une partie de détermination (65) configurée de façon à déterminer si le liquide (U) à l'intérieur du tuyau (3) doit ou non être dégelé ou thermiquement maintenu, et à délivrer en sortie le courant pulsé (Y) uniquement lorsqu'il est déterminé que le liquide (U) à l'intérieur du tuyau (3) doit être dégelé ou thermiquement maintenu.

8. Dispositif d'admission de liquide (1) selon la revendication 6 ou 7, dans lequel la partie de détermination (65) répond au capteur de température de réservoir (16) ou au capteur de température ambiante (18), et effectue la détermination en fonction du fait que l'une ou l'autre d'une température de réservoir et d'une température ambiante devient inférieure ou égale à une température de gel urée-eau.
